# EUROPÄISCHE PATENTSCHRIFT

(11) **EP 2 054 254 B1**
(45) Veröffentlichungstag und Bekanntmachung des Hinweises auf die Patenterteilung: **11.07.2012**
(21) Anmeldenummer: 07819329.9
(22) Anmeldetag: 25.10.2007
(51) Int. Cl.: B60J 5/10

(54) **KRAFTFAHRZEUG MIT EINEM KOFFERRAUM**
MOTOR VEHICLE WITH A LUGGAGE SPACE
VÉHICULE AUTOMOBILE AVEC UN COFFRE À BAGAGES

(30) Priorität: 02.11.2006 DE 102006051645
(43) Veröffentlichungstag der Anmeldung: 06.05.2009
(73) Patentinhaber: Bayerische Motoren Werke Aktiengesellschaft, 80809 München (DE)
(72) Erfinder: GERSMANN, Klaus, 80935 München (DE); CLAUSEN-SCHAUMANN, Andreas, 82347 Bernried (DE); EVANS, David, 80992 München (DE)
(74) Vertreter: Günther, Hans Peter
(86) Internationale Anmeldenummer: PCT/EP2007/009281
(87) Internationale Veröffentlichungsnummer: WO 2008/052700

(56) Entgegenhaltungen:
- DE-A1- 19 922 399
- FR-A- 2 798 952
- US-A- 3 398 985

## Beschreibung

Die Erfindung betrifft ein Kraftfahrzeug mit einem Kofferraum gemäß dem Oberbegriff des Anspruchs 1. Ein solches Fahrzeug ist aus US3398985A bekannt.

Aufgabe der Erfindung ist es, ein Kraftfahrzeug mit einem Kofferraum zu schaffen, der einen unteren Kofferraumdeckel aufweist, und der untere Kofferraumdeckel im geöffneten Zustand eine hohe Stabilität bei einer Belastung hat.

Diese Aufgabe wird durch die Merkmale des Anspruchs 1 gelöst.

Das erfindungsgemäße Kraftfahrzeug weist einen Kofferraum mit einer Ausschnittsöffnung in einer Karosserie auf, die durch einen zweiteiligen Kofferraumdeckel verschließbar ist. Der zweiteiligen Kofferraumdeckel besteht aus einem oberen Kofferraumdeckel und einem unteren Kofferraumdeckel. Der jeweilige Kofferraumdeckel ist über mindestens ein Scharnier an der Karosserie angelenkt.

In einer vorteilhaften Ausführungsform befindet sich der obere Kofferraumdeckel in der geschlossenen Position im Wesentlichen in einer horizontalen Lage, in der der obere Kofferraumdeckel zum Fahrzeugheck hin geneigt sein kann. Der untere Kofferraumdeckel weist in der geschlossenen Position im Wesentlichen eine vertikale Lage auf, in der der untere Kofferraumdeckel zum Fahrzeug hin geneigt sein kann. Der obere Kofferraumdeckel ist nach oben um einen Winkel *β* und der untere Kofferraumdeckel ist nach unten um einen Winkel *α* aus der jeweiligen geschlossenen Position in die jeweilige geöffnete Stellung verschwenkbar.

Der erfindungsgemäße, untere Kofferraumdeckel weist mindestens einen Schwenkhebel auf, der über eine an einem unteren Karosserieabschnitt ausgebildete Drehachse verschwenkbar angeordnet ist. Der Schwenkhebel steht in der geöffneten Stellung des unteren Kofferraumdeckels in Eingriff mit dem unteren Karosserieabschnitt. Durch die Anordnung des erfindungsgemäßen Schwenkhebels wird in einfacher Weise eine Versteifung des unteren Kofferraumdeckels in der geöffneten Stellung erreicht.

In einer vorteilhaften Ausführungsform weist der Schwenkhebel einen unteren Schwenkarm auf, an dessen freiem Ende ein Anschlag angeordnet ist, der in der geöffneten Stellung des unteren Kofferraumdeckels an einem Anschlag anliegt, der an einer Karosseriewand des unteren Karosserieabschnittes vorgesehen ist.

Vorteilhafterweise ist mindestens ein erstes Verriegelungsbauteil an dem unteren Karosserieabschnitt über eine Drehachse verschwenkbar angeordnet ist. Ferner ist an dem unteren Kofferraumdeckel mindestens ein zweites Verriegelungsbauteil vorgesehen, das in der geöffneten Stellung des unteren Kofferraumdeckels in formschlüssigem Eingriff mit dem entsprechenden ersten Verriegelungsbauteil steht. Somit sind in der verriegelten Stellung der Verriegelungsbauteile über die Verriegelungsbauteile Zugkräfte aufnehmbar, die von dem in der geöffneten Stellung sich befindenden unteren Kofferraumdeckel über die Verriegelungsbauteile in den Karosserieabschnitt direkt einleitbar sind.

Der Schwenkhebel weist in einer vorteilhaften Ausführungsform einen oberen Schwenkarm auf, der an dem unteren Kofferraumdeckel befestigt ist.

In dem unteren Kofferraumdeckel ist ein Hohlraum ausgebildet, in dem ein Querprofil angeordnet ist, an dem der obere Schwenkarm des Schwenkhebels befestigt ist. Durch das Querprofil können Aufprallkräfte, die in das Fahrzeugheck eingeleitet werden, aufgenommen werden.

In einer vorteilhaften Ausführungsform ist an dem oberen Schwenkarm ein Abschnitt mit einem im Prinzip U-förmigen Verlauf ausgebildet, der so ausgelegt ist, dass der obere Schwenkarm aus dem Hohlraum des unteren Karosserieabschnittes und in den Hohlraum zurück verschwenkbar ist.

Der untere Kofferraumdeckel weist vorteilhafterweise Mittel zur Federung und Dämpfung auf, die das Öffnen und/oder das Schließen des unteren Kofferraumdeckels unterstützen.

Es sind in einer vorteilhaften Ausführungsform Mittel vorgesehen, die ein Drehmoment auf das Verriegelungsbauteil bewirken, so dass das Verriegelungsbauteil in Öffnungsrichtung des unteren Kofferraumdeckels schwenken Kann.

An einem freien Ende des ersten Verriegelungsbauteils, das an dem Karosserieabschnitt angeordnet ist, ist vorteilhafterweise ein hakenförmiger Abschnitt ausgebildet. Ferner ist an einem freien Ende des zweiten Verriegelungsbauteils, das an dem Kofferraumdeckel befestigt ist, ein hakenförmiger Abschnitt ausgebildet ist. Die beiden hakenförmigen Abschnitte sind so ausgebildet und zueinander angeordnet, dass die beiden hakenförmigen Abschnitte der Verriegelungsbauteile in einer verriegelten Stellung in einem formschlüssigen Eingriff miteinander stehen.

An dem unteren Karosserieabschnitt ist in einer vorteilhaften Ausführungsform mindestens ein Anschlag vorgesehen, wobei an dem jeweiligen Anschlag ein hakenförmiger Abschnitt ausgebildet ist. Gegenüber dem jeweiligen Anschlag am Karosserieabschnitt ist jeweils ein weiterer Anschlag am Ende des jeweiligen ersten Verriegelungsbauteils vorgesehen ist, der einen hakenförmigen Abschnitt aufweist. In der geöffneten Stellung des unteren Kofferraumdeckels stehen die hakenförmigen Abschnitte der gegenüberliegenden Anschläge in Eingriff miteinander oder liegen zumindest aneinander an.

Eine Ausführungsform der Erfindung wird nachstehend anhand der Zeichnungen beispielshalber beschrieben. Dabei zeigen:
- Fig. 1: einen Längsschnitt durch ein Ende eines Fahrzeughecks und eines daran angeordneten unteren Kofferraumdeckels in Höhe eines Scharniers, über das der untere Kofferraumdeckel mit seinem einen Ende an einer Karosseriewand angelenkt ist, wobei sich der untere Kofferraumdeckel im geschlossenen Zustand befindet,
- Fig. 2: einen Längsschnitt entsprechend der Fig. 1, wobei sich der untere Kofferraumdeckel in einer Endposition eines geöffneten Zustandes befindet,
- Fig. 3: einen Längsschnitt durch das Ende des Fahrzeughecks und des daran angeordneten, unteren Kofferraumdeckels beabstandet zu einem Scharnier, wobei sich der untere Kofferraumdeckel in einer geschlossenen Position befindet,
- Fig. 4: einen Längsschnitt entsprechend der Fig. 3, wobei sich der untere Kofferraumdeckel in einem teilweise geöffneten Zustand in einer ersten Zwischenposition mit einem Schwenkwinkel *α*₁ dargestellt ist,
- Fig. 5: einen Längsschnitt entsprechend der Fig. 4 bei einer zweiten Zwischenposition und einem größeren Schwenkwinkel *α*₂, und
- Fig. 6: eine Schnittansicht entsprechend der Fig. 3, in der sich der untere Kofferraumdeckel in der vollständig geöffneten Position befindet und eine Verriegelung zwischen dem Verriegelungsbauteil und einem hakenförmigen Endabschnitt an der Rückseite des unteren Kofferraumdeckels stattgefunden hat.

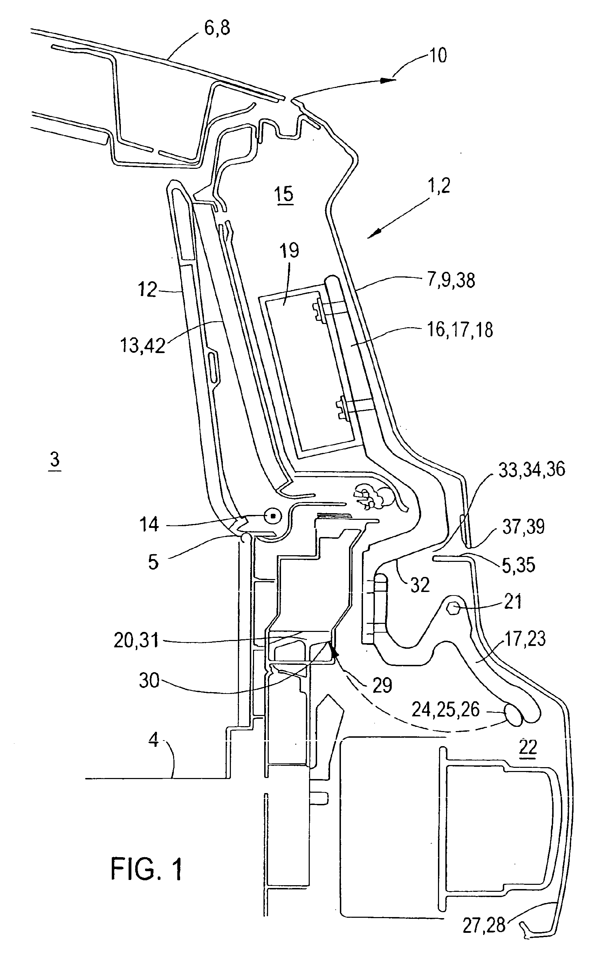

Die Fig 1 zeigt eine Schnittdarstellung eines Hecks 2 eines Kraftfahrzeuges 1. In dem Heck 2 ist ein Kofferraum 3 vorgesehen, der von einer Karosserie 4 umgeben ist. Die Karosserie 4 weist eine Karosserieausschnittsöffnung 5 auf, die durch einen oberen Kofferraumdeckel 6 und durch einen unteren Kofferraumdeckel 7 verschließbar ist.

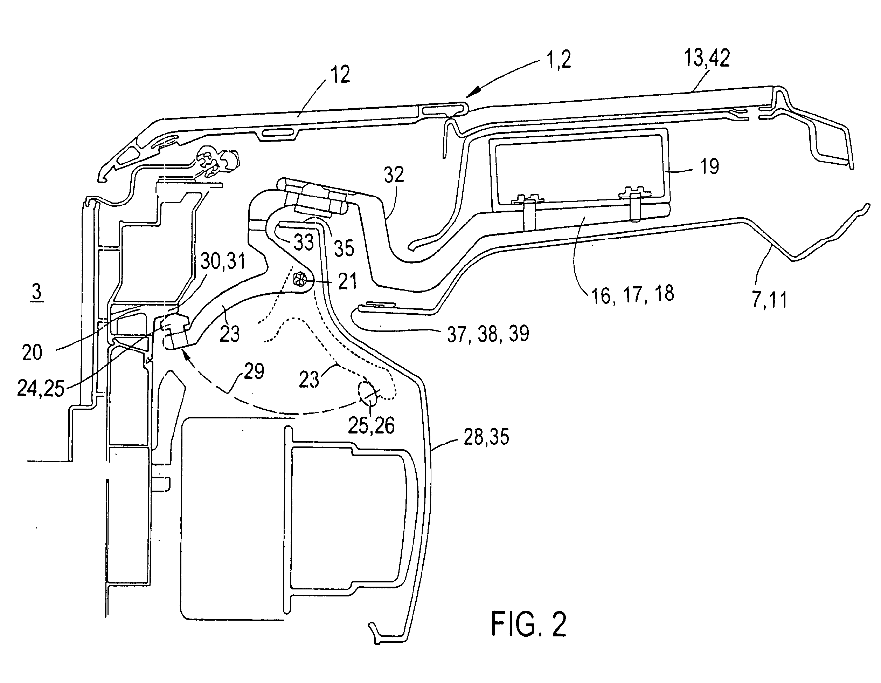

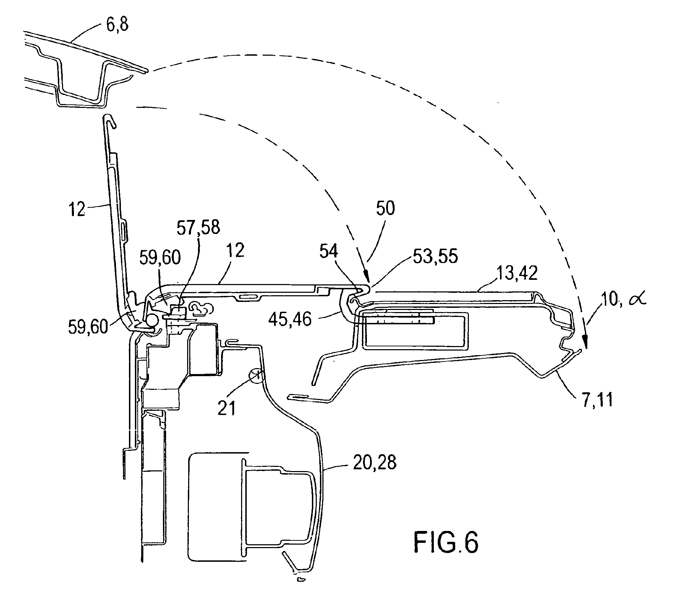

In der Fig. 1 befinden sich der obere Kofferraumdeckel 6 und der untere Kofferraumdeckel 7 jeweils in einer geschlossenen Position 8, 9. Der untere Kofferraumdeckel 7 ist nach unten um einen Winkel *α* aus der geschlossenen Position 9 in eine geöffnete Stellung 11 verschwenkbar. Ein Pfeil 10 gibt die Schwenkrichtung an, in der sich der untere Kofferraumdeckel 7 bewegt, um in die in den Fig. 2 und 6 gezeigte, geöffnete Stellung 11 zu kommen.

Der untere Kofferraumdeckel 7 weist mindestens ein strebenförmiges Verriegelungsbauteil 12 auf, das an einer zum Kofferraum 3 gerichteten Rückseite 13 des unteren Kofferraumdeckels 7 schwenkbar um eine Drehachse 14 angeordnet ist.

Ein oberer Arm 16 eines Schwenkhebels 17 ragt in einen Hohlraum 15 des unteren Kofferraumdeckels 7. Ein freies Ende 18 des oberen Armes 16 ist an einem Querprofil 19 befestigt. Das Querprofil 19 dient zur Erhöhung der Stabilität des unteren Kofferraumdeckels 7, insbesondere bei einem Heckcrash.

Der Schwenkhebel 17 ist um eine an einem Karosserieabschnitt 20 angeordnete Drehachse 21 schwenkbar. In einen Hohlraum 22 des unteren Karosserieabschnittes 20 ragt ein unterer Arm 23 des Schwenkhebels 17. An einem freien Ende 24 ist ein Anschlag 25 befestigt. Der Anschlag 25 ist beispielsweise mit einem Gummipuffer 26 versehen.

Im geschlossenen Zustand 9 des unteren Kofferraumdeckels 7 befindet sich das freie Ende 24 des unteren Armes 23 vor einer Innenfläche 27 eines Verkleidungsbauteiles 28 des Karosserieabschnitts 20. Beim Öffnen des unteren Kofferraumdeckels 7 schwenkt der untere Arm 23 um die Drehachse 21 in Richtung eines Pfeiles 29.

In der geöffneten Stellung 11 des unteren Kofferraumdeckels 7 liegt der Anschlag 25 des unteren Armes 23 des Schwenkhebels 17 an einem Anschlag 30 an, der an einer zum Kofferraum 3 zugewandten Karosseriewand 31 ausgebildet ist.

Der obere Arm 16 des Schwenkhebels 17 weist im Anschluss an seine Anlenkung an die Drehachse 21 einen im Prinzip U-förmigen Abschnitt 32 auf. Der Abschnitt 32 ist so geformt, dass der Abschnitt 32 in der geöffneten Stellung 11 des unteren Kofferraumdeckels 7 zum einen aus einer in dem Karosserieabschnitt 20 ausgebildeten Durchgangsöffnung 33 so heraus schwenkbar ist, dass noch genügend Abstand zu dem Außenrand 34 der Durchgangsöffnung 33 in der geschlossenen Position 9 des unteren Kofferraumdeckels 7 vorhanden ist. Ferner ist der Abschnitt 32 so ausgebildet, dass noch genügend Abstand zwischen dem Abschnitt 32 und einer Außenfläche 35 am oberen Ende 36 des Karosserieabschnittes 20 vorhanden ist.

Ein unteres Ende 37 eines Verkleidungsbauteiles 38 des unteren Kofferraumdeckels 7 ist um einen Spalt 39 von der Außenfläche 35 des Verkleidungsbauteils 28 des Karosserieabschnittes 20 beabstandet. Entsprechend ist das untere Ende 37 des Verkleidungsbauteiles 28 in der geöffneten Stellung 11 des unteren Kofferraumdeckels 7 um einen Spalt 39 zu der Außenfläche 35 des Verkleidungsbauteils 28 beabstandet.

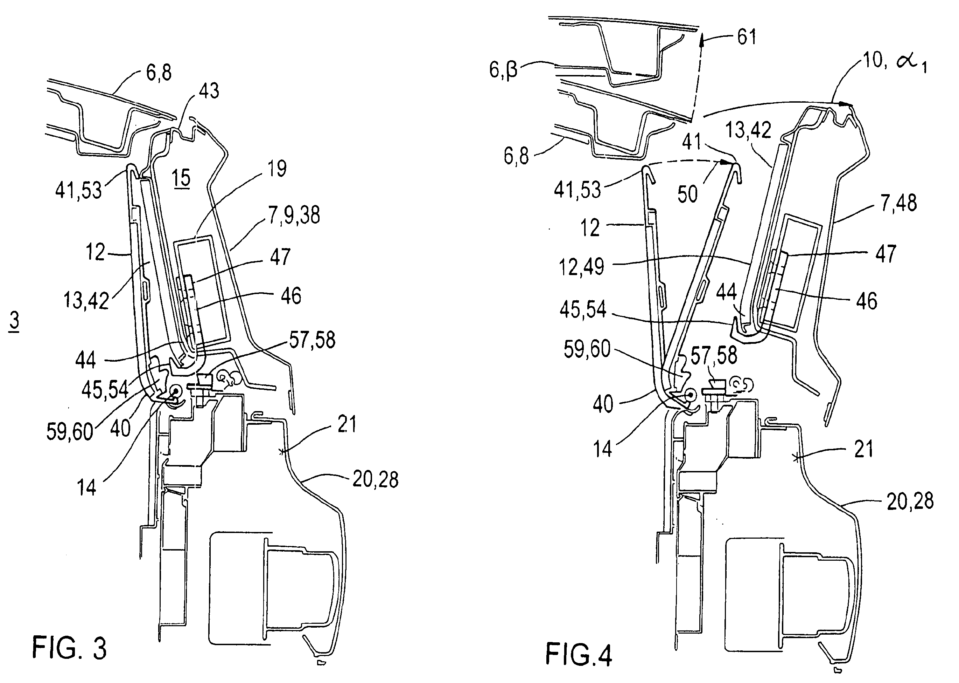

Die Fig. 3 bis 6 zeigen einen Längsschnitt, der im Unterschied zu dem Längsschnitt der Fig. 1 und 2 beabstandet zu einem Scharnier erfolgt.

Die Fig. 3 zeigt den unteren Kofferraumdeckel 7 in der geschlossenen Position 9. An einer Rückseite 13, die in der geschlossenen Position 9 zum Kofferraum 3 gerichtet ist, ist das Verriegelungsbauteil 12 an seinem unteren Ende 40 über die Drehachse 14 verschwenkbar an dem unteren Karosserieabschnitt 20 drehbar gelagert.

Ein freies oberes Ende 41 des Verriegelungsbauteils 12 liegt an einer zum Kofferraum 3 gerichteten Außenfläche 42 des unteren Kofferraumdeckels 7 mit einem in Öffnungsrichtung 10 wirkenden Drehmoment an. Das auf das Verriegelungsbauteil 12 wirkende Drehmoment wird beispielsweise über mindestens eine nicht dargestellte Feder erzeugt. Alternativ oder zusätzlich kann das Verriegelungsbauteil 12 über eine nicht dargestellte Verriegelungsvorrichtung, die beispielsweise am oberen, freien Ende 43 des unteren Kofferraumdeckels 7 angeordnet ist, in der an der Außenfläche 42 anliegenden Position verrastet sein. An einem zum oberen, freien Ende 43 gegenüberliegenden Ende 44 des unteren Kofferraumdeckels 7 ragt in Höhe des unteren Endes 40 des Verriegelungsbauteils 12 ein freies Ende 45 eines zweiten Verriegelungsbauteiles 46 über die Außenfläche 42 des unteren Kofferraumdeckels 7. Ein zu dem freien Ende 45 des zweiten Verriegelungsbauteiles 46 gegenüberliegendes Ende 47 ist in der gezeigten Ausführungsform an dem Hohlprofil 19 im Hohlraum 15 des unteren Kofferraumdeckels 7 befestigt. Nach der Entriegelung des unteren Kofferraumdeckels 7 wird gleichzeitig die vorhandene Verriegelung zwischen dem Verriegelungsbauteil 12 und dem unteren Kofferraumdeckel 7 gelöst.

Die Fig. 4 zeigt eine Zwischenposition 48 des unteren Kofferraumdeckels 7 und des Verriegelungsbauteils 12. Der untere Kofferraumdeckel 7 schwenkt dabei um die Drehachse 21. Ein Pfeil 50 symbolisiert die Öffnungsrichtung des Verriegelungsbauteiles 12. Ein in strichlierten Linien dargestellter Pfeil 61 deutet die Öffnungsrichtung des oberen Kofferraumdeckels 6 an, der um einen Schwenkwinkel *β* in eine geöffnete Stellung verschwenkbar ist.

An dem Karosserieabschnitt 20 ist jeweils ein Anschlag 57 gegenüber dem jeweiligen unteren Ende 40 eines Verriegelungsbauteils 12 vorgesehen. An dem jeweiligen Anschlag 57 ist ein hakenförmiger Abschnitt 58 ausgebildet. Ferner ist am jeweiligen unteren Ende 40 des Verriegelungsbauteils 12 ein Anschlag 59 vorgesehen, der einen hakenförmigen Abschnitt 60 aufweist. In der geöffneten Stellung 11 des unteren Kofferraumdeckels 7 stehen die hakenförmigen Abschnitte 58, 60 der Anschläge 57, 59 in Eingriff miteinander.

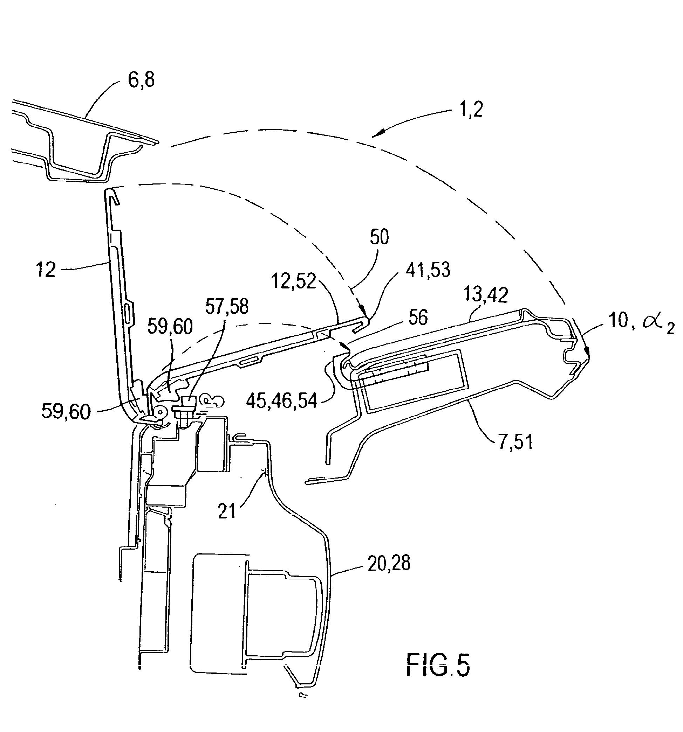

Die Fig. 5 zeigt eine weitere Zwischenposition 51 des unteren Kofferraumdeckels 7 und eine Zwischenposition 52 des Verriegelungsbauteils 12 Aus der Fig. 5 ist erkennbar, dass das freie Ende 41, das einen hakenförmigen Abschnitt 53 aufweist, erkennbar, dass das freie Ende 41, das einen hakenförmigen Abschnitt 53 aufweist, sich einem hakenförmigen Abschnitt 54 angenähert hat, der am freien Ende 45 des zweiten Verriegelungsbauteils 46 ausgebildet ist. In dieser Zwischenposition 51 hat noch keine Verriegelung zwischen dem hakenförmigen Abschnitt 53 des Verriegelungsbauteils 12 und dem hakenförmigen Abschnitt 54 des zweiten Verriegelungsbauteils 46 stattgefunden.

Wie aus der Fig. 5 hervorgeht, beschreibt der hakenförmige Abschnitt 54 des zweiten Verriegelungsbauteils 46 einen Kreisbogen um die Drehachse 21, der durch einen Pfeil 56 in gestrichelten Linien in der Fig. 5 dargestellt ist.

In der Fig. 6 befindet sich der Kofferraumdeckel 7 in der geöffneten Stellung 11. Gleichzeitig ist eine Verriegelüng zwischen dem hakenförmigen Abschnitt 53 des ersten Verriegelungsbauteils 12 und dem hakenförmigen Abschnitt 54 des zweiten Verriegelungsbauteils 46 erfolgt, so dass die beiden Verriegelungsbauteile 12, 46 sich in einer verriegelten Stellung 55 befinden.

In einer Ausführungsform sind mindestens zwei Verriegelungsbauteile 12 und entsprechend zwei Verriegelungsbauteile 46 beabstandet zueinander vorgesehen, In der geöffneten Stellung 11 des unteren Kofferraumdeckels 7 befinden sich die jeweiligen Verriegelungsbauteile 12 und die entsprechenden jeweiligen Verriegelungsbauteile 46 in einer verriegelten Stellung 55 miteinander.

Das jeweilige Verriegelungsbauteil 12 wirkt in der verriegelten Stellung 55 in der geöffneten Stellung 11 des unteren Kofferraumdeckels 7 als ein Bauteil, das auf Zug belastbar ist. Die übertragbare Zugkraft wird dabei von dem unteren Kofferraumdeckel 7 über das jeweilige Verriegelungsbauteil 46, des damit verriegelten jeweiligen Verriegelungsbauteils 12 in den Karosserieabschnitt 20 eingeleitet.

Durch das jeweilige Verriegelungsbauteil 12 wird erreicht, dass der untere Kofferraumdeckel 7 in der geöffneten Stellung 11 eine höhere Belastung aufnehmen kann. Damit kann auf den unteren Kofferraumdeckel 7 in der geöffneten Stellung 11 Ladegut oder dergleichen abgestellt werden. Durch das jeweilige Verriegelungsbauteil 12 können auch die jeweiligen Schwenkhebel 17 kleiner dimensioniert sein.

## Patentansprüche

1. Kraftfahrzeug mit einem Kofferraum, der eine Ausschnittsöffnung in einer Karosserie aufweist, die über mindestens einen Kofferraumdeckel verschließbar ist, wobei der jeweilige Kofferraumdeckel über mindestens ein Scharnier an der Karosserie angelenkt ist, wobei
die Karosserieausschnittsöffnung (5) durch einen zweiteiligen Kofferraumdeckel verschließbar ist, der aus einem oberen Kofferraumdeckel (6) und einem unteren Kofferraumdeckel (7) besteht, wobei der obere Kofferraumdeckel (6) nach oben um einen Winkel β und der untere Kofferraumdeckel (7) nach unten um einen Winkel α aus jeweils einer geschlossenen Position (8, 9) in jeweils eine geöffnete Stellung (11) verschwenkbar ist, **dadurch gekennzeichnet dass** der untere Kofferraumdeckel (7) mindestens einen Schwenkhebel (17) aufweist, der über eine an einem unteren Karosserieabschnitt (20) ausgebildete Drehachse (21) verschwenkbar angeordnet ist, und dass der Schwenkhebel (17) in der geöffneten Stellung (11) des unteren Kofferraumdeckels (7) mit dem unteren Karosserieabschnittes (20) in Eingriff steht.

2. Kraftfahrzeug nach Anspruch 1,
**dadurch gekennzeichnet, dass** der Schwenkhebel (17) einen unteren Schwenkarm (23) aufweist, an dessen freiem Ende (24) ein Anschlag (25) angeordnet ist, der in der geöffneten Stellung (11) des unteren Kofferraumdeckels (7) an einem Anschlag (30) anliegt, der an einer Karosseriewand (31) des unteren Karosserieabschnittes (20) vorgesehen ist.

3. Kraftfahrzeug nach den Ansprüchen 1 oder 2,
**dadurch gekennzeichnet, dass** an dem Karosserieabschnitt (20) mindestens ein Verriegelungsbauteil (12) über eine Drehachse (14) verschwenkbar angeordnet ist und dass an dem unteren Kofferraumdeckel (7) ein weiteres Verriegelungsbauteil (46) vorgesehen ist, das in der geöffneten Stellung (11) des unteren Kofferraumdeckels (7) in formschlüssigem Eingriff mit dem Verriegelungsbauteil (12) steht.

4. Kraftfahrzeug nach Anspruch 3,
**dadurch gekennzeichnet, dass** in der verriegelten Stellung (55) der Verriegelungsbauteile (12, 46) über die Verriegelungsbauteile (12, 46) Zugkräfte aufnehmbar sind, die von dem in der geöffneten Stellung (11) sich befindenden unteren Kofferraumdeckel (7) über die Verriegelungsbauteile (12, 46) in den Karosserieabschnitt (20) einleitbar sind.

5. Kraftfahrzeug nach einem der vorhergehenden Ansprüche,
**dadurch gekennzeichnet, dass** der Schwenkhebel (17) einen oberen Schwenkarm (16) aufweist, der an dem unteren Kofferraumdeckel (7) befestigt ist.

6. Kraftfahrzeug nach Anspruch 5,
**dadurch gekennzeichnet, dass** der untere Kofferraumdeckel (7) einen Hohlraum (15) aufweist, dass in dem Hohlraum (15) des unteren Kofferraumdeckels (7) ein Querprofil (19) angeordnet ist, an dem der obere Schwenkarm (16) des Schwenkhebels (17) befestigt ist.

7. Kraftfahrzeug nach Anspruch 6,
**dadurch gekennzeichnet, dass** das Querprofil (19) zur Aufnahme von Aufprallkräften, die auf den unteren Kofferraumdeckel (7) wirken, dient.

8. Kraftfahrzeug nach einem der Ansprüche 5 bis 7,
**dadurch gekennzeichnet, dass** der obere Schwenkarm (16) einen Abschnitt (32) mit einem im Prinzip U-förmigen Verlauf aufweist, der so gestaltet ist, dass der obere Schwenkarm um einen Außenrand (34) eines oberen Endes (36) des unteren Karosserieabschnittes (20) verschwenkbar ist.

9. Kraftfahrzeug nach einem der vorhergehenden Ansprüche,
**dadurch gekennzeichnet, dass** der untere Kofferraumdeckel (7) Mittel zur Federung und Dämpfung aufweist, die das Öffnen und/oder das Schließen des unteren Kofferraumdeckels (7) unterstützen.

10. Kraftfahrzeug nach einem der Ansprüche 3 und 4,
**dadurch gekennzeichnet, dass** Mittel vorgesehen sind, die ein Drehmoment auf das Verriegelungsbauteil (12) bewirken, so dass das Verriegelungsbauteil (12) in Öffnungsrichtung des unteren Kofferraumdeckels (7) schwenken Kann.

11. Kraftfahrzeug nach einem der Ansprüche 3, 4 und 10,
**dadurch gekennzeichnet, dass** an einem freien Ende (41) des Verriegelungsbauteils (12) ein hakenförmiger Abschnitt (53) ausgebildet ist, dass an einem freien Ende (45) des weiteren Verriegelungsbauteils (46), das an dem Kofferraumdeckel (7) befestigt ist, ein hakenförmiger Abschnitt (54) ausgebildet ist, und dass die beiden hakenförmigen Abschnitte (53, 54) in einer verriegelten Stellung (55) der Verriegelungsbauteile (12, 46) in einem formschlüssigen Eingriff miteinander stehen.

12. Kraftfahrzeug nach einem der Ansprüche 3, 4, 10 und 11,
**dadurch gekennzeichnet, dass** an dem unteren Karosserieabschnitt (20) mindestens ein Anschlag (57) vorgesehen ist, dass an dem jeweiligen Anschlag (57) ein hakenförmiger Abschnitt (58) ausgebildet ist, dass gegenüber dem jeweiligen Anschlag (57) jeweils ein weiterer Anschlag (59) am Ende (40) des Verriegelungsbauteils (12) vorgesehen ist, dass der weitere Anschlag (59) einen hakenförmigen Abschnitt (60) aufweist und dass in der geöffneten Stellung (11) des unteren Kofferraumdeckels (7) die hakenförmigen Abschnitte (58, 60) der Anschläge (57, 59) in Eingriff miteinander stehen.

## Claims

1. A motor vehicle comprising a luggage boot having an opening cut out of a vehicle body and closable by at least one cover, wherein the cover is pivoted to the body by at least one hinge, wherein the body opening (5) is closable by a two-part cover comprising a top cover (6) and a bottom cover (7), wherein the top cover (6) is pivotable upwards through an angle (β) and the bottom cover (7) is pivotable downwards through an angle (α) out of a respective closed position (8, 9) into a respective open position (11),
**characterised in that** the bottom cover (7) has at least one lever (17) pivotable around a pivot (21) formed on a bottom body portion (20) and the lever (17) engages the bottom portion (20) when the bottom cover (7) is in the open position (11).

2. A vehicle according to claim 1,
**characterised in that** the lever (17) has a bottom swivel arm (23) with a free end (24) on which a stop (25) is disposed and abuts a stop (30) when the bottom cover (7) is in the open position (11), the stop (30) being provided on a wall (31) of the bottom body portion (20).

3. A vehicle according to claim 1 or claim 2,
**characterised in that** at least one locking component (12) is pivotable on a pivot (14) on the body portion (20) and an additional locking component (46) is provided on the bottom cover (7) and positively engages the locking component (12) when the bottom cover (7) is in the open position (11).

4. A vehicle according to claim 3,
**characterised in that** when the locking components (12, 46) are in the locked position (55) they can absorb tensile forces exerted on the body portion (20) via the locking components (12, 46) when the bottom cover (7) is in the open position (11).

5. A vehicle according to any of the preceding claims,
**characterised in that** the lever (17) has a top arm (16) fastened to the bottom luggage-boot cover (7).

6. A vehicle according to claim 5,
**characterised in that** the bottom cover (7) has a cavity (15), and a transverse profile (19) is disposed in the cavity (15) of the bottom cover (7) and is fastened to the top arm (16) of the swivel lever (17).

7. A vehicle according to claim 6,
**characterised in that** the transverse profile (19) is adapted to absorb impact forces acting on the bottom cover (7).

8. A vehicle according to any of claims 5 to 7,
**characterised in that** the top swivel arm (16) has a substantially U-shaped portion (32) such that the top swivel arm is pivotable around an outer edge (34) of the top end (36) of the bottom body portion (20).

9. A vehicle according to any of the preceding claims, **characterised in that** the bottom cover (7) has spring-mounting and damping means of assistance in opening and/or closing the bottom cover (7).

10. A vehicle according to claim 3 or claim 4, **characterised in that** means are provided which exert a torque on the locking component (12) so that the locking component (12) can pivot in the direction for opening the bottom cover (7).

11. A vehicle according to any of claims 3, 4 and 10, **characterised in that** a hooked portion (53) is formed on a free end (41) of the locking component (12), a hooked portion (54) is formed on the free end (45) of the additional locking component (46) fastened to the cover (7), and the two hooked portions (53, 54) positively engage one another when the locking components (12, 46) are in a locked position (55).

12. A vehicle according to any of claims 3, 4, 10 and 11, **characterised in that** at least one stop (57) is provided on the bottom body portion (20), a hooked portion (58) is formed on each respective stop (57), an additional stop (59) opposite the respective stop (57) is provided at the end (40) of the locking component (12), the additional stop (59) has a hooked portion (60) and the hooked portions (58, 60) of the stops (57, 59) engage one another when the bottom cover (7) is in the open position (11).

## Revendications

1. Véhicule automobile équipé d'un coffre à bagages ayant une ouverture découpée dans la carrosserie et qui est fermée par au moins un couvercle de coffre,
* le couvercle respectif étant articulé à la carrosserie par au moins une charnière,
* la découpe (5) dans la carrosserie est fermée par un couvercle de coffre en deux parties comprenant un couvercle supérieur (6) et un couvercle inférieur (7),
* le couvercle supérieur (6) se pivotant en position ouverte respective (11) vers le haut avec un angle β et le couvercle inférieur (7) basculant vers le bas suivant un angle α à partir chacun d'une position fermée (8, 9),
véhicule **caractérisé en ce que**
le couvercle inférieur (7) comporte au moins un levier pivotant (17) monté pivotant par un axe de rotation (21) porté par un segment de carrosserie inférieur (20), et
- le levier pivotant (17) en position ouverte (11) du couvercle inférieur (7) est en prise avec le segment de carrosserie inférieur (20).

2. Véhicule automobile selon la revendication 1,
**caractérisé en ce que**
le levier pivotant (17) comporte un bras pivotant inférieur (23) dont l'extrémité libre (24) comporte une butée (25) qui s'appuie contre une butée (30) lorsque la partie inférieure de couvercle (7) est en position ouverte (11), cette butée (30) étant prévue sur une paroi (31) du segment inférieur de carrosserie (20).

3. Véhicule automobile selon la revendication 1 ou 2,
**caractérisé en ce qu'**
au moins un composant de verrouillage (12) est monté pivotant autour d'un axe de rotation (14) sur le segment de carrosserie (20), et
- le couvercle inférieur (7) comporte un autre composant de verrouillage (46) qui vient en prise par la forme avec le composant de verrouillage (12) lorsque le couvercle inférieur (7) est en position ouverte (11).

4. Véhicule automobile selon la revendication 3,
**caractérisé en ce qu'**
en position verrouillée (55), des composants de verrouillage (12, 46), des efforts de traction sont transmis par les composants de verrouillage (12, 46), dans le segment de carrosserie (20), lorsque le couvercle inférieur (7) est en position ouverte (11).

5. Véhicule automobile selon l'une des revendications précédentes,
**caractérisé en ce que**
le levier pivotant (17) comporte un bras pivotant supérieur (16) fixé au couvercle inférieur (7).

6. Véhicule automobile selon la revendication 5,
**caractérisé en ce que**
le couvercle inférieur (7) comporte une cavité (15) logeant un profilé transversal (19) auquel est fixé le bras pivotant supérieur (16) du levier pivotant (17).

7. Véhicule automobile selon la revendication 6,
**caractérisé en ce que**
le profilé transversal (19) est destiné à recevoir les efforts engendrés par une collision et s'exerçant sur le couvercle inférieur (7).

8. Véhicule automobile selon l'une des revendications 5 à 7,
**caractérisé en ce que**
le bras pivotant supérieur (16) comporte un segment (32) avec un tracé en principe en forme de U conçu pour que le bras pivotant supérieur puisse pivoter autour du bord extérieur (34) de l'extrémité supérieure (36) du segment inférieur de carrosserie (20).

9. Véhicule automobile selon l'une des revendications précédentes,
**caractérisé en ce que**
le couvercle inférieur (7) comporte des moyens de ressort et d'amortissement qui assistent l'ouverture et/ou la fermeture du couvercle inférieur (7).

10. Véhicule automobile selon l'une des revendications 3 et 4, **caractérisé par**
des moyens exerçant un couple sur le composant de verrouillage (12) pour qu'en position ouverte de la partie inférieure (7), le composant de verrouillage (12) puisse pivoter.

11. Véhicule automobile selon l'une des revendications 3, 4 et 10, **caractérisé en ce que**
- l'extrémité libre (41) du composant de verrouillage (12) comporte un segment (53) en forme de crochet,
- l'extrémité libre (45) de l'autre composant de verrouillage (46) fixé au couvercle inférieur (7) comporte un segment en forme de crochet (54), et
- les deux segments en forme de crochets (53, 54) en position de verrouillage (55) des composants de verrouillage (12, 46) sont en prise par une liaison par la forme.

12. Véhicule automobile selon l'une des revendications 3, 4, 10 et 11,
**caractérisé en ce que**
le segment inférieur de carrosserie (20) comporte au moins une butée (57),
- la butée (57) est munie d'un segment (58) en forme de crochet,
- en regard de la butée respective (57), il y a une autre butée (59) à l'extrémité (40) du composant de verrouillage (12),
- cette autre butée (59) a un segment en forme de crochet (60), et
- en position ouverte (11) du couvercle inférieur (7), les segments en forme de crochets (58, 60) des butées (57, 59) sont en prise.
